(19) Europäisches Patentamt
European Patent Office
Office européen des brevets

(11) EP 4 786 173 A1

(12) EUROPEAN PATENT APPLICATION
published in accordance with Art. 153(4) EPC

(43) Date of publication:
05.08.2026 Bulletin 2026/32

(21) Application number: 24871472.7

(22) Date of filing: 22.07.2024

(51) International Patent Classification (IPC):
B32B 27/12 (2006.01)       B32B 5/02 (2006.01)
B32B 27/00 (2006.01)       C09J 7/21 (2018.01)
C09J 7/38 (2018.01)        C09K 3/10 (2006.01)

(52) Cooperative Patent Classification (CPC):
B32B 5/02; B32B 27/00; B32B 27/12; C09J 7/21;
C09J 7/38; C09K 3/10

(86) International application number:
PCT/JP2024/026176

(87) International publication number:
WO 2025/069670 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 JP 2023166754

(71) Applicant: Tomoegawa Corporation
Tokyo 104-8335 (JP)

(72) Inventors:
• ISHIZAKA, Yuuya
Shizuoka-shi, Shizuoka 421-0192 (JP)
• SATO, Takeshi
Shizuoka-shi, Shizuoka 421-0192 (JP)

(74) Representative: V.O.
P.O. Box 87930
2508 DH Den Haag (NL)

(54) **SEAL MATERIAL**

(57) The present invention addresses the problem of providing a seal material that is exception in terms of the strength of a fibrous substrate and overall cushioning properties. This sheet material (10) comprises a fibrous substrate (11), an undercoat layer (12) provided on one main surface (11a) of the fibrous substrate (11), and an adhesive layer (13) provided on the undercoat layer (12), wherein the undercoat layer (12) is made of a resin (A) having a glass transition temperature of 25 °C or higher, the adhesive layer (13) is made of a resin (B) other than the resin used in the undercoat layer (12), the thickness of the seal material (10) is 2 mm or more and 15 mm or less, and a relationship $X_2 < X_1$ holds, where $X_1$ mg is the organic component content in a 1 mm-thick layer from the surface of the seal material (10) on the adhesive-layer (13) side, excluding the adhesive layer (13), and $X_2$ mg is the organic component content of all remaining portions of the seal material (10) excluding the adhesive layer (13) and the 1 mm layer therebelow from the surface on the adhesive-layer (13) side.

FIG. 1

**Description**

TECHNICAL FIELD

The present invention relates to a seal material.

BACKGROUND ART

A seal material is used, for example, as a member for filling gaps that occur between the framework of a building, such as pillars and beams, and gypsum boards or fire doors that constitute the walls. It is also used as a member to fill gaps that occur between windows of devices such as water heaters and their housings.

The seal material includes a substrate containing fibers, an adhesive layer formed by coating an adhesive on the entire surface of one side of the substrate, and a release sheet provided on the adhesive layer.

Seal materials having an adhesive layer are required to have substrate surface strength and cushioning properties.

The substrate surface strength is necessary to prevent the substrate from succumbing to the peeling force and causing delamination at the surface layer when the release sheet is peeled off. The cushioning is necessary for the seal material to fully exhibit its cushioning function.

If the surface strength of the substrate is increased, the seal material becomes hard and the cushioning performance decreases. On the other hand, if the cushioning property is improved, the strength of the seal material decreases, causing delamination at the surface layer. In other words, there is a trade-off between the surface strength of the substrate and the cushioning properties.

A seal material is known that comprises a sheet-like fibrous substrate, a fiber-sealing undercoat layer provided on the surface of the sheet-like fibrous substrate, an adhesive layer in which adhesive is formed in a dot pattern on the undercoat layer, and a release sheet provided on the adhesive layer, the adhesive layer having a thickness of 100 $\mu$m to 200 $\mu$m (see, for example, Patent Document 1). This seal material prevents the fibers on the surface of the substrate containing fibers from adhering to the release sheet via the adhesive layer and being peeled off.

In a method for manufacturing an adhesive tape in which a hot melt adhesive is applied to one side of a porous substrate to form an adhesive layer, a method is known in which a liquid incompatible with the hot melt adhesive is applied to the porous substrate, and then a hot melt adhesive containing a thermoplastic block copolymer rubber as a main component is applied to the liquid-applied surface (see, for example, Patent Document 2). According to this manufacturing method, it is possible to suppress the penetration of the adhesive into the porous substrate, thereby reducing the amount of excess adhesive used, and also to obtain an adhesive tape with good productivity.

When applying a hydrophilic coating to paper made primarily from pulp and having a density of 0.30 g/cm$^3$ to 1.00 g/cm$^3$, a method for suppressing penetration of the hydrophilic coating into the coated base paper is known, in which a dry film layer of an organic polymer gel is first formed on the surface of the paper and then the hydrophilic coating is applied (see, for example, Patent Document 3). This method makes it possible to efficiently suppress the penetration of the hydrophilic coating material into the surface of low-density, bulky paper.

Citation List

Patent Documents

Patent Document 1: Japanese Unexamined Patent Application, First Publication No. H11-269441
Patent Document 2: Japanese Unexamined Patent Application, First Publication No. H09-310049
Patent Document 3: Japanese Unexamined Patent Application, First Publication No. 2007-107171

SUMMARY OF INVENTION

Technical Problem

However, the inventions described in Patent Documents 1 to 3 did not provide a seal material that was excellent in substrate surface strength and cushioning properties.

The present invention has been made in view of the above circumstances, and has its object to provide a seal material having excellent surface strength of a fibrous substrate and excellent overall cushioning properties.

Solution to Problem

The present invention has the following aspects.

(1) A seal material comprising:

a fibrous substrate;
an undercoat layer provided on one main surface of the fibrous substrate; and
an adhesive layer provided on the undercoat layer,
wherein the fibrous substrate is made of inorganic fibers,
the undercoat layer is made of a resin (A) having a glass transition temperature of 25 °C or higher,
the adhesive layer is made of a resin (B) other than the resin used in the undercoat layer,
the thickness of the seal material is 2 mm or more and 15 mm or less, and
a relationship $X_2 < X_1$ holds, where $X_1$ mg is the organic component content in a 1 mm-thick layer from the surface
of the seal material on the adhesive-layer side, excluding the adhesive layer, and $X_2$ mg is the organic component
content of all remaining portions of the seal material excluding the adhesive layer and the 1 mm layer therebelow
from the surface on the adhesive-layer side.

(2) The seal material according to (1), wherein the resin (A) is a water-based resin.
(3) The seal material according to (1) or (2), wherein the resin (B) is a resin having a glass transition temperature of -80
°C or higher and 0 °C or lower.
(4) The seal material according to any one of (1) to (3), wherein the resin (B) is a water-based acrylic resin.
(5) The seal material according to any one of (1) to (4), wherein the density of the fibrous substrate is 160 kg/m$^3$ or more
and 250 kg/m$^3$ or less.
(6) The seal material according to any one of (1) to (5), wherein the thickness of the fibrous substrate is 2 mm or more
and less than 15 mm.
(7) The seal material according to any one of (1) to (6), wherein a release paper is provided on the adhesive layer.

Advantageous Effects of Invention

According to the present invention, it is possible to provide a seal material that is excellent in strength of the
fibrous substrate and in overall cushioning properties.

BRIEF DESCRIPTION OF DRAWINGS

[FIG. 1] A cross-sectional view schematically showing the seal material according to an embodiment of the present
invention along the longitudinal direction of a seal material.
[FIG. 2] A perspective view schematically showing a seal material according to an embodiment of the present
invention.

DESCRIPTION OF EMBODIMENTS

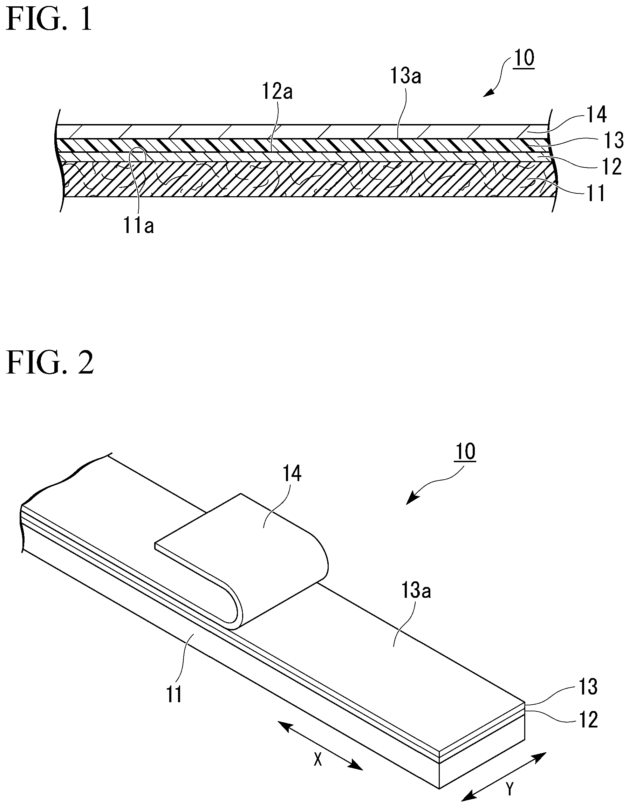

Hereinbelow, a seal material according to one embodiment of the present invention will be described with
reference to the drawings. FIG. 1 is a cross-sectional view schematically showing the seal material according to an
embodiment of the present invention along the longitudinal direction of a seal material. FIG. 2 is a perspective view
schematically showing a seal material according to an embodiment of the present invention.
In addition, in each drawing used in the following explanation, for convenience, characteristic parts may be
shown enlarged to make the features easier to understand, and the dimensional ratios of each component may differ from
the actual ones.
Furthermore, the materials, dimensions, etc. exemplified in the following description are merely examples, and the present
invention is not limited thereto, and can be implemented by making appropriate changes within the scope that does not
change the gist of the present invention.

Seal Material

As shown in FIGS. 1 and 2, a seal material 10 of the present embodiment comprises a fibrous substrate 11, an undercoat layer 12 provided on one main surface 11a of the fibrous substrate 11, and an adhesive layer 13 provided on the undercoat layer 12. The seal material 10 of the present embodiment may also include a release paper 14 provided on the adhesive layer 13.

Furthermore, the seal material 10 can have any shape in plan view. In FIG. 2, a rectangular shape is shown as an example.

(Fibrous substrate)

The fibrous substrate 11 is the main body of the seal material 10, and has an undercoat layer 12 provided on one of its main surfaces 11a.

The fibers of the fibrous substrate 11 are composed only of inorganic fibers.

Examples of inorganic fibers include amorphous fibers such as biosoluble ceramic fibers, glass fibers, glass wool, and rock wool fibers; polycrystalline fibers such as carbon fibers, activated carbon fibers, and alumina fibers; and minerals such as sepiolite. Among these, amorphous fibers are preferred from the viewpoint of cost. Among these, rock wool fiber is more preferable.

These inorganic fibers may be used alone or in combination of two or more.

The average fiber diameter of the inorganic fibers is preferably 3 $\mu$m or more and 20 $\mu$m or less, and more preferably 3 $\mu$m or more and 7 $\mu$m or less. When the average fiber diameter of the inorganic fibers is equal to or greater than the above lower limit, the strength (shape retention) of the fibrous substrate 11 is improved. When the average fiber diameter of the inorganic fibers is equal to or less than the upper limit, the uniformity of the strength of the fibrous substrate 11 is improved.

The average fiber diameter of the inorganic fibers is the arithmetic mean of area diameters obtained by calculating the cross-sectional area perpendicular to the longitudinal direction of the inorganic fibers using a known calculation method based on vertical cross sections at any 20 locations of the fibrous substrate 11 imaged under a microscope, and then calculating the diameter of a perfect circle having the same area as the cross-sectional area.

The average fiber length of the inorganic fibers is preferably 3 mm or more and 35 mm or less, and more preferably 5 mm or more and 25 mm or less. When the average fiber length of the inorganic fibers is equal to or greater than the lower limit, the strength of the fibrous substrate 11 is improved. When the average fiber length of the inorganic fibers is equal to or less than the upper limit, the uniformity of the strength of the fibrous substrate 11 is improved.

The average fiber length of the inorganic fibers is the arithmetic mean value of the longitudinal lengths of 20 inorganic fibers randomly selected under a microscope.

The fibrous substrate 11 may contain an inorganic binder in addition to the inorganic fibers.

Examples of inorganic binders include colloidal silica, fumed silica, alumina sol, zirconia sol, and titania sol. Among these, colloidal silica is preferred from the viewpoint of binder reinforcement of inorganic fibers.

These inorganic binders may be used alone or in combination of two or more.

The inorganic binder may be a spherical powder, an amorphous powder, an emulsion, a sol, or a gel.

When the inorganic binder is a spherical powder or an irregularly shaped powder, the average particle size of the inorganic binder is preferably 7 $\mu$m or more and 20 $\mu$m or less, and more preferably 9 $\mu$m or more and 15 $\mu$m or less. When the average particle size of the inorganic binder is equal to or greater than the lower limit, the strength of the fibrous substrate 11 is improved. When the average particle size of the inorganic binder is equal to or less than the upper limit, the uniformity of the strength of the fibrous substrate 11 is improved.

The average particle size of the inorganic binder is a value determined by the BET method. Specifically, the average particle diamter of the inorganic binder is calculated based on the specific surface area of the inorganic binder calculated by the BET method and the density of the inorganic binder, according to the following equation (1).

$$\text{Average particle diameter of inorganic binder } [\mu m] = 6/(\text{BET specific surface area } [m^2/g] \times \text{density } [g/cm^3]) \ (1) \qquad (1)$$

The fibrous substrate 11 may contain an organic component in addition to inorganic fibers.

Examples of the organic component include an organic binder, a paper strength agent, and a polymer flocculant.

Examples of the organic binder include acrylic resin, starch, PVA (polyvinyl alcohol), and polyacrylamide. Among these, acrylic resins are preferred from the viewpoints of production stability and maintaining strength within the layer.

These organic binders may be used singly or in combination of two or more. The organic binder may be an emulsion.

Examples of the acrylic resin include homopolymers of acrylic monomers such as acrylic acid and esters thereof, methacrylic acid and esters thereof, acrylamide, and acrylonitrile, or copolymers thereof; and copolymers of at least one of the above acrylic monomers with a vinyl monomer such as vinyl acetate, maleic anhydride, and styrene.

Examples of paper strength agents include melamine resins, urea resins, polyamide epichlorohydrin resins, epoxy resins, dialdehyde starch, polyacrylamide, and polyethyleneimine.

These paper strength agents may be used alone or in combination of two or more.

Examples of polymer flocculants include polyacrylamide, polymethacrylate, polyvinylamine, polyacrylic acid, styrene-based resins, and polyethylene oxide.

These polymer flocculants may be used alone or in combination of two or more.

The density of the fibrous substrate 11 is preferably 160 kg/m$^3$ or more and 250 kg/m$^3$ or less, and more preferably 180 kg/m$^3$ or more and 230 kg/m$^3$ or less. When the density of the fibrous substrate 11 is equal to or greater than the lower limit, the fibrous substrate 11 has sufficient strength and is easy to handle. When the density of the fibrous substrate 11 is equal to or less than the upper limit, the fibrous substrate 11 has sufficient voids, and sufficient cushioning properties are obtained.

The thickness of the fibrous substrate 11 is not particularly limited, but is preferably 2 mm or more and less than 15 mm, and more preferably 5 mm or more and less than 12 mm. If the thickness of the fibrous substrate 11 is less than the lower limit, it will not be possible to exhibit sufficient cushioning properties as a seal material, and it will not be able to conform sufficiently to the irregularities on the surface of other components. If the thickness of the fibrous substrate 11 exceeds the above-mentioned upper limit, the fibrous substrate 11 becomes too thick and difficult to handle when used as a seal material, and this leads to an increase in raw material costs, thereby impairing productivity.

(Undercoat Layer)

The undercoat layer 12 is provided on the one main surface 11a of the fibrous substrate 11. The undercoat layer 12 is formed by applying a resin (A) described below to one main surface 11a of the fibrous substrate 11 and drying the applied resin. The undercoat layer 12 has the function of preventing interlayer delamination of the fibrous substrate 11 when the release paper 14 is peeled off from the adhesive layer 13.

The undercoat layer 12 is made of the resin (A) having a glass transition temperature of 25 °C or higher.

The resin (A) is preferably a water-based resin. Examples of water-based resins include acrylic esters, methyl methacrylate, and colloidal silica (water-based inorganic binders).

The glass transition temperature of the resin (A) is measured using a Q200 (manufactured by TA Instruments Japan Co., Ltd.) with the temperature range set to -50 °C to 50 °C (second heating under the same conditions after rapid cooling inside the device), using a Tzero Pan (made of aluminum) as the sample container, at a heating rate of 10 °C/min under a nitrogen atmosphere (50 ml/min).

(Adhesive Layer)

The adhesive layer 13 is provided on one main surface 12a of the undercoat layer 12. The adhesive layer 13 is formed by applying a resin (B) described below on the one main surface 12a of the undercoat layer 12 and drying the applied resin. The shape of the adhesive portion 13 in a planar view is not particularly limited, and can be arbitrarily selected from a full-surface coating, a discontinuous pattern, such as a circle, an ellipse, a square, a rectangle, a line, or other shape, and a continuous pattern, such as a line, a lattice, or other shape.

The adhesive layer 13 is made of a resin (B) other than the resin used in the undercoat layer 12.

The resin (B) is preferably a resin having a glass transition temperature of -80 °C or higher and 0 °C or lower. As a resin having a glass transition temperature of -80 °C or higher and 0 °C or lower, for example, a water-based acrylic resin is preferable. Examples of the water-based acrylic resin include vinyl acetate.

The glass transition temperature of resin (B) is a value measured by the same method as that for the glass transition temperature of resin (A).

The adhesive layer 13 is mainly composed of the resin (B), but may contain inorganic components as long as the effects of the present invention are not impaired. Examples of inorganic components include inorganic additives contained in general adhesives.

(Release Paper)

The release paper 14 is provided on the adhesive layer 13, that is, on a surface 13c of the adhesive layer 13 opposite to the undercoat layer 12.

The release paper 14 is not particularly limited, but any known release sheet can be used. Examples include polyester film, polyethylene film, polypropylene film, polyimide film, release paper, polyether ether ketone (PEEK), polyethylene naphthalate (PEN), liquid crystal polyarylate, polyamideimide (PAI), polyethersulfone (PES), etc., and films of these that have been subjected to release treatment, etc., and among these, release paper is preferred in terms of its resistance to huddling and low cost.

The thickness of the release paper 14 is not particularly limited, but is preferably 50 $\mu$m or more and 150 $\mu$m or

less, and more preferably 60 $\mu$m or more and 120 $\mu$m or less.

(Seal Material)

The thickness of the seal material 10, i.e., the thickness of the laminate consisting of the fibrous substrate 11, the undercoat layer 12, and the adhesive layer 13, is 2 mm or more and 15 mm or less, and preferably 5 mm or more and 12 mm or less. If the thickness of the seal material 10 is less than the lower limit, it will not be possible to exhibit sufficient cushioning properties as a seal material, and it will not be able to conform sufficiently to the irregularities on the surfaces of other components. If the thickness of the seal material 10 exceeds the upper limit, the seal material 10 becomes too thick, making it difficult to handle when used as a seal material, and also leads to an increase in raw material costs, thereby impairing productivity.

In the seal material 10, the relationship $X_2 < X_1$ holds, where $X_1$ mg is the organic component content in a 1 mm-thick layer from the surface on the adhesive layer 13 side of the seal material 10 (in FIG. 1, the surface 13a of the adhesive layer 13 opposite the undercoat layer 12), excluding the adhesive layer 13, per unit area, and $X_2$ mg is the organic component content in all remaining portions from the surface on the adhesive layer 13 side of the seal material 10 (in FIG. 1, the surface 13a of the adhesive layer 13 opposite the undercoat layer 12), excluding the adhesive layer 13 and the 1 mm layer therebelow.

The organic component content $X_1$ is the organic content relative to the total mass of the 1 mm layer from the surface of the seal material 10 on the adhesive layer 13 side, excluding the adhesive layer 13. The organic component content $X_2$ is the organic content relative to the total mass of the entire portion of the seal material 10 excluding the adhesive layer 13 and the 1 mm layer therebelow from the surface of the seal material 10 on the adhesive layer 13 side.

If the organic content does not satisfy the relationship $X_2 < X_1$, the resin contained in the fibrous substrate 11 will not be sufficiently localized to the surface of the fibrous substrate 11 facing the adhesive layer 13, resulting in a decrease in the cushioning properties of the fibrous substrate 11 and at the same time a loss of substrate strength on the surface facing the adhesive layer 13.

The organic component content $X_1$ mg in the 1 mm layer from the surface of the seal material 10 on the adhesive layer 13 side (in FIG. 1, the surface 13a of the adhesive layer 13 opposite the undercoat layer 12) excluding the adhesive layer 13, and the organic content $X_2$ mg in all remaining portions from the surface of the seal material 10 on the adhesive layer 13 side (in FIG. 1, the surface 13a of the adhesive layer 13 opposite the undercoat layer 12) excluding the adhesive layer 13 and the 1 mm layer therebelow, can be measured by measuring the loss on ignition, thereby obtaining the value of the amount of organic components in a seal material sample.

(Manufacturing Method)

The manufacturing method of the seal material 10 of the present embodiment includes, for example, a step of applying the above-mentioned resin (A) to the entire surface of the one main surface 11a of the fibrous substrate 11 and drying the applied resin to form the undercoat layer 12 (undercoat layer forming step), a step of applying the above-mentioned resin (B) to the one main surface 12a of the undercoat layer 12 and drying the applied resin to form the adhesive layer 13 (adhesive layer forming step), and a step of laminating the release paper 14 on the adhesive layer 13 (i.e., the surface 13a of the adhesive layer 13 opposite the undercoat layer 12) (lamination step).

In the adhesive layer forming step, the means for forming the adhesive layer is not particularly limited, and known means such as a method using a coating plate, gravure coating, or transferring an adhesive sheet can be used.

In the seal material 10 of the present embodiment, the fibrous substrate 11 is made of inorganic fibers, the undercoat layer 12 is made of a resin (A) having a glass transition temperature of 25 °C or higher, the adhesive layer 13 is made of a resin (B) other than the resin used in the undercoat layer 12, the thickness of the seal material 10 is 2 mm or more and 15 mm or less, and when the organic content in a 1 mm layer from the surface of the seal material 10 on the adhesive layer 13 side (in FIG. **1,** the surface 13a of the adhesive layer 13 opposite the undercoat layer 12) excluding the adhesive layer 13 is $X_1$ mg, and the organic content in the entire remaining portion of the seal material 10 on the adhesive layer 13 side (in FIG. 1, the surface 13a of the adhesive layer 13 opposite the undercoat layer 12) excluding the adhesive layer 13 and a 1 mm layer therebelow is $X_2$ mg, $X_2 < X_1$ is satisfied, and therefore the seal material 10 having excellent strength of the fibrous substrate 11 and excellent overall cushioning properties is obtained.

It should be noted that the present invention is not limited to the above-described embodiment.

(Example)

The present invention will be described in more detail below, but the present invention is not limited to the following content.

Using the fibrous substrate (I) described below, seal materials were prepared according to the method for preparing a seal material described below, with the thickness, layer structure, and organic content shown in Table 1. The resulting seal materials were evaluated as follows.

<Evaluation of Cushioning (Conformability)>

The compressive elastic modulus of the seal material was determined by the following procedure, and the cushioning properties were evaluated based on this value.

A 20 mm × 20 mm fibrous substrate sample was prepared, with an undercoat layer provided on one main surface.

A compressive load was applied to the entire surface of the fibrous substrate sample, and the application of the compressive load was stopped when a repulsive force of 0.5 kgf was generated.

The displacement (mm) at the stop position was determined, and the elastic modulus was calculated from the displacement, stress, and area values to evaluate the cushioning properties.

Regarding the value of the elastic modulus E (kPa), when E $\leqq$ 50, it was rated as "A", when 50 < E $\leqq$ 75, it was rated as "B", and when 75 < E, it was rated as "C".

<Evaluation of Surface Strength>

A 50 mm × 60 mm fibrous substrate sample was prepared, with an undercoat layer provided on one main surface.

An adhesive tape (Okamoto Tape No. 411N) was applied to the entire surface of the fibrous substrate sample, and a load of 12.5 g/cm$^2$ was applied thereon and maintained for 30 seconds.

Thereafter, the adhesive tape was peeled off, and the weight loss X (mg) of the fibrous substrate sample before and after peeling was measured, and the magnitude of this value was evaluated as the surface strength (unit: mg).

When the weight loss (amount of fiber removed) X of the sample was X $\leqq$ 2, it was rated as "A", when 2 < X < 5 it was rated as "B", and when 5 $\leqq$ X it was rated as "C".

<Evaluation of Productivity/Workability>

The workability of the seal material during installation was evaluated. Specifically, the temporary fastening function of the seal material when being attached to the installation surface during installation work was evaluated.

The evaluation criteria were as follows: "A" if the seal material could be temporarily attached to the installation surface without being pressed into contact therewith and there were no problems such as the seal material falling off during work; "B" if the seal material could be temporarily attached by being pressed into contact with the installation surface and there were no problems such as the seal material falling off during work; and "C" if the temporary attachment was not sufficient and the seal material fell off during work.

<Measurement of Organic Content>

A crucible was prepared and heated in a heating furnace at 120 °C for 15 minutes or more to obtain a crucible A in an absolutely dry state, and the mass of the crucible A was measured.

The sample was placed in the crucible A and the crucible was again heated in the furnace under the same conditions to reach an absolutely dry state. The combined mass of the crucible A and the sample after drying (hereinafter referred to as crucible A containing the sample) was measured, and the mass of the crucible A was subtracted from the obtained value to obtain the mass of dried sample B.

The crucible A containing the sample was heated at 600 °C for 20 minutes or more, and the mass of the crucible A containing the sample after heating was measured.

The mass C of the organic component in the sample was obtained by subtracting the mass of the crucible A containing the sample after heating from the mass of the crucible A containing the sample before heating.

The above operation was carried out on a 1 mm layer from the surface of the undercoat layer side excluding the adhesive layer of the seal material, and on all remaining layers excluding the 1 mm layer from the surface of the undercoat layer side excluding the adhesive layer of the seal material, using samples each having a size of 10 mm × 10 mm on the main surface. The mass C of the organic component of the former was defined as $X_1$, and the mass C of the organic component of the latter was defined as $X_2$. The relationship in magnitude therebetween was examined, and the results were obtained as the organic content.

<Overall Rating>

Based on the evaluation results of cushioning (conformability), surface strength, and productivity/workability, a comprehensive evaluation was conducted according to the following evaluation criteria.

A: The results for all three evaluation items are "A".
B: Of the three evaluation items, all results are "A" or "B", and one or more evaluation items have a result of "B".
C: The result of one or more of the three evaluation items is "C".

The example that exhibited the best performance in the overall evaluation was marked with "Best" in Table 1.

Furthermore, seal materials were produced by maintaining the seal material thickness, layer structure, and organic content of the Best example, while adjusting the thickness and density of the fibrous substrate, the Tg and water-based nature of the undercoat layer, and the material, Tg, type, and water-based nature of the adhesive layer as shown in Table 2, and the cushioning (conformability), surface strength, and productivity/workability of each seal material were evaluated. The results are shown in Table 2.

Production of Fibrous Substrate

<Production of Fibrous Substrate (I)>

As inorganic fibers, 91.5 parts by mass of rock wool fiber (manufactured by Pacific Materials Co., Ltd., product name "Pacific Mineral Fiber Granular Cotton") with an average fiber diameter of 3 $\mu$m to 6 $\mu$m, 0.5 parts by mass of colloidal silica (manufactured by Nissan Chemical Co., Ltd., product name "Snowtex 0") with an average particle diameter of 12 $\mu$m as an inorganic binder, 6 parts by mass of acrylic emulsion (manufactured by Nippon Zeon Co., Ltd., product name "Nipol Lx852") as an organic binder, and 0.5 parts by mass of polyacrylamide (manufactured by Arakawa Chemical Industries Co., Ltd., product name "Polystron 117") as an internal paper strength enhancer were dispersed and mixed in water, and then 1.5 parts by mass of styrene-based resin (manufactured by Meisei Chemical Industry Co., Ltd., product name "Cerafix ST") as a polymer flocculant was added to obtain a papermaking slurry.

The slurry was wet-formed into a sheet using a square hand-made sheet machine and dried at 150 °C. A predetermined amount of synthetic resin emulsion (manufactured by Showa Denko K.K., product name "Polysol AG-101") as resin (A) having a glass transition temperature of 25 °C or higher was dropped onto one of the main surfaces, and laminated onto one of the main surfaces so that the coating amount was 15 g/m$^2$.

After lamination, the laminate was placed in an oven at 150 °C for 20 minutes to dry, forming an undercoat layer, and a sheet-like fibrous substrate (I) having a basis weight of 2000g/m$^2$, a thickness of 10mm, a width of 250mm and a length of 250mm was obtained.

The basis weight of the organic components (organic binder, internal paper strength enhancer, polymer flocculant) contained in the fibrous substrate (I) was 160 g/m$^2$, and the basis weight of the inorganic components (inorganic fibers, inorganic binder) was 1840 g/m$^2$.

The density of the fibrous substrate was adjusted by adjusting the amount of the polymer flocculant, and the thickness of the fibrous substrate was adjusted by adjusting conditions such as pressure during drying, to obtain fibrous substrates having the density and thickness of each example and comparative example.

In addition, resins having various glass transition temperatures, and water-based and non-water-based resins were used for the undercoat layer to form undercoat layers corresponding to each example and comparative example.

(Method of Producing Seal Materials)

A coated plate was placed on one main surface of the undercoat layer of the fibrous substrate (I), and a predetermined amount of water-based acrylic emulsion was dropped onto the coated plate as a resin (B) other than the resin used in the undercoat layer. Excess adhesive was scraped off with a squeegee, and the undercoat layer was coated on one main surface so that the coating amount was 100 g/m$^2$.

After coating, the coated plate was placed in an oven at 120 °C for 10 minutes to dry, thereby forming an adhesive layer.

Next, a release paper was attached onto the adhesive layer to obtain a seal material with a thickness of 10 mm.

With respect to the resin (B), adhesive layers corresponding to each Example and Comparative Example were formed by using resins having various glass transition temperatures and resins that were water-based or non-water-based.

The obtained seal material was subjected to the above-mentioned various evaluations. The results are shown in Tables 1 and 2.

In addition, in the seal material, the thicknesses of the undercoat layer and the adhesive layer are very small relative to the thickness of the fibrous substrate (I), and do not affect the cushioning properties of the seal material. Therefore, the thickness of each seal material listed in Tables 1 and 2 does not need to take into account the undercoat layer and adhesive layer, and therefore the thickness of the seal material is listed as the same value as the thickness of the fibrous substrate, and these values (mm) are rounded off one decimal place.

[Table 1]

| Constituent elements | Specified items | Best | Seal material (totality) | | | | | | | | | | |
|---|---|---|---|---|---|---|---|---|---|---|---|---|---|
| | | | Thickness (mm) | | | | | | | Layer structure | | Organic component content | |
| Seal material (totality) | Thickness (mm) | 10 | 1 | 2 | 5 | 12 | 15 | 20 | 10 | 10 | 10 | 10 |
| | Layer structure | Ad/Uc/B | Ad/Uc/B | Ad/Uc/B | Ad/Uc/B | Ad/Uc/B | Ad/Uc/B | Ad/Uc/B | Ad/B | Uc/B | Ad/Uc/B | Ad/Uc/B |
| | Organic component content | $1.5X_2<X_1$ | $1.5X_2<X_1$ | $1.5X_2<X_1$ | $1.5X_2<X_1$ | $1.5X_2<X_1$ | $1.5X_2<X_1$ | $1.5X_2<X_1$ | - | $1.5X_2<X_1$ | $X_2-X_1$ | $1.2X_2<X_1$ |
| Fibrous substrate (B) | Thickness (mm) | 10 | 1 | 2 | 5 | 12 | 15 | 20 | 10 | 10 | 10 | 10 |
| | Density (kg/m³) | 200 | 200 | 200 | 200 | 200 | 200 | 200 | 200 | 200 | 200 | 200 |
| Undercoat layer (Uc) | Tg(°C) | 30 | 30 | 30 | 30 | 30 | 30 | 30 | - | 30 | 30 | 30 |
| | Water-based | Water-based | Water-based | Water-based | Water-based | Water-based | Water-based | Water-based | - | Water-base | Water-base | Water-based |
| Adhesive layer (Ad) | Material | Resin (B) | Resin (B) | Resin (B) | Resin (B) | Resin (B) | Resin (B) | Resin (B) | Resin (B) | - | Resin (B) | Resin (B) |
| | Tg(°C) | -40 | -40 | -40 | -40 | -40 | -40 | -40 | -40 | - | -40 | -40 |
| | Type | AC | AC | AC | AC | AC | AC | AC | AC | - | AC | AC |
| | Water-based | Water-based | Water-based | Water-based | Water-based | Water-based | Water-based | Water-based | Water-based | - | Water-based | Water-based |
| Evaluation | (1) Cushioning conformability | A | C | B | A | A | A | A | B | A | C | B |
| | Compression ratio (percent) | 25 | 16 | 19 | 25 | 25 | 25 | 25 | 21 | 25 | 9 | 20 |
| | Elastic modulus (kPa) | 50 | 78 | 66 | 50 | 50 | 50 | 50 | 60 | 50 | 139 | 63 |
| | (2) Surface strength | A | A | A | A | A | A | A | C | A | A | B |
| | Fiber removal amount | 1.5 | 1.5 | 1.5 | 1.5 | 1.5 | 1.5 | 1.5 | 17 | 1.5 | 1.5 | 4.8 |
| | (3) Productivity/ workability | A | B | A | A | A | B | C | C | C | C | A |
| | Overall evaluation | A | C | B | A | A | B | C | C | C | C | B |

[Table 2]

| Constituent elements | Specified items | Fibrous substrate | | | | Undercoat layer | | | Adhesive layer | | | | | | |
|---|---|---|---|---|---|---|---|---|---|---|---|---|---|---|---|
| | | Density | | | | Tg | | Water-based | Materia l | Tg | | | | Type | Water-based |
| Seal material (totality) | Thickness (mm) | 10 | 10 | 10 | 10 | 10 | 10 | 10 | 10 | 10 | 10 | 10 | 10 | 10 | 10 |
| | Layer structure | Ad/Uc/B | Ad/Uc/B | Ad/Uc/B | Ad/Uc/B | Ad/Uc/B | Ad/Uc/B | Ad/Uc/B | Ad/Uc/B | Ad/Uc/B | Ad/Uc/B | Ad/Uc/B | Ad/Uc/B | Ad/Uc/B | Ad/Uc/B |
| | Organic component content | $1.5X_2<X_1$ | $1.5X_2<X_1$ | $1.5X_2<X_1$ | $1.5X_2<X_1$ | $1.5X_2<X_1$ | $1.5X_2<X_1$ | $1.5X_2<X_1$ | $1.5X_2<X_1$ | $1.5X_2<X_1$ | $1.5X_2<X_1$ | $1.5X_2<X_1$ | $1.5X_2<X_1$ | $1.5X_2<X_1$ | $1.5X_2<X_1$ |
| Fibrous substrate (B) | Thickness (mm) | 10 | 10 | 10 | 10 | 10 | 10 | 10 | 10 | 10 | 10 | 10 | 10 | 10 | 10 |
| | Density (kg/m³) | 160 | 180 | 220 | 250 | 200 | 200 | 200 | 200 | 200 | 200 | 200 | 200 | 200 | 200 |
| Undercoat layer (Uc) | Tg(°C) | 30 | 30 | 30 | 30 | 0 | 25 | 30 | 30 | 30 | 30 | 30 | 30 | 30 | 30 |
| | Water-based | Water-based | Water-based | Water-based | Water-based | Water-based | Water-based | Non-water-based | Water-based | Water-based | Water-based | Water-based | Water-based | Water-based | Water-based |
| Adhesive layer (Ad) | Material | Resin (B) | Resin (B) | Resin (B) | Resin (B) | Resin (B) | Resin (B) | Resin (B) | Resin (B) | Resin (B) | Resin (B) | Resin (B) | Resin (B) | Resin (B) | Resin (B) |
| | Tg(°C) | -40 | -40 | -40 | -40 | -40 | -40 | -40 | -40 | -70 | -50 | -20 | -5 | -40 | -40 |
| | Water-based | Water-based | Water-based | Water-based | Water-based | Water-based | Water-based | Water-based | Water-based | Water-based | Water-based | Water-based | Water-based | Water-based | Non-water-based |
| Evaluation | (1) Cushoning (conformability) | A | A | A | B | A | A | A | A | A | A | A | A | A | A |

| | | | | | | | | | | | | | | | |
|---|---|---|---|---|---|---|---|---|---|---|---|---|---|---|---|
| | Compression ratio (percent) | 25 | 25 | 25 | 21 | 25 | 25 | 25 | 25 | 25 | 25 | 25 | 25 | 25 | 25 |
| | Elastic modulus (kPa) | 50 | 50 | 50 | 50 | 50 | 50 | 50 | 50 | 50 | 50 | 50 | 50 | 50 | 50 |
| | (2) Surface strength | B | A | A | A | C | B | A | A | A | A | A | A | A | A |
| | Fiber removal amount | 4.6 | 1.5 | 1.5 | 1.5 | 13 | 4.2 | 1.5 | 1.5 | 1.5 | 1.5 | 1.5 | 1.5 | 1.5 | 1.5 |
| | (3) Productivity / workability | B | A | A | A | C | B | B | C | B | A | A | B | B | B |
| | Overall evaluation | B | A | A | B | C | B | B | C | B | A | A | B | B | B |

As is clear from the results in Tables 1 and 2, when all of the following conditions were satisfied, the seal material was excellent in overall cushioning (conformability), surface strength, and productivity/operability (with the overall evaluation being rated A or B):

· When the thickness of the seal material is 2 mm or more and 15 mm or less;
· When the organic content is $X_2 < X_1$;
· When a three-layer structure of adhesive layer (Ad)/undercoat layer (Uc)/fibrous substrate (B) is adopted;
· The glass transition temperature of the resin of the undercoat layer is 25 °C or higher; and
· When the resin constituting the adhesive layer is different from the resin constituting the undercoat layer.

Furthermore, when one or more of the following conditions were met in addition to the above conditions, the seal material tended to exhibit excellent overall cushioning (conformability), surface strength, and/or productivity and workability (with each evaluation being generally rated A or B).

· When the resin (A) constituting the undercoat layer is water-based;
· When the glass transition temperature of the resin (B) constituting the adhesive layer is -80 °C or higher and 0 °C or lower;
· When the resin (B) constituting the adhesive layer is a water-based acrylic resin;
· When the density of the fibrous substrate is 160 kg/m$^3$ or more and 250 kg/m$^3$ or less.

INDUSTRIAL APPLICABILITY

According to the present invention, it is possible to provide a seal material that is excellent in strength of the fibrous substrate and in overall cushioning properties.

REFERENCE SIGNS LIST

10 Seal material
11 Fibrous substrate
12 Undercoat layer
13 Adhesive layer
14 Release paper

**Claims**

1.   A seal material comprising:

a fibrous substrate;
an undercoat layer provided on one main surface of the fibrous substrate; and
an adhesive layer provided on the undercoat layer,
wherein the fibrous substrate is made of inorganic fibers,
the undercoat layer is made of a resin (A) having a glass transition temperature of 25 °C or higher,
the adhesive layer is made of a resin (B) other than the resin used for the undercoat layer,
the thickness of the seal material is 2 mm or more and 15 mm or less, and
a relationship $X_2 < X_1$ holds, where $X_1$ mg is the organic component content in a 1 mm-thick layer from the surface of the seal material on the adhesive-layer side, excluding the adhesive layer, and $X_2$ mg is the organic component content of all remaining portions of the seal material excluding the adhesive layer and the 1 mm layer therebelow from the surface on the adhesive-layer side.

2. The seal material according to claim 1, wherein the resin (A) is a water-based resin.

3. The seal material according to claim 1, wherein the resin (B) is a resin having a glass transition temperature of -80 °C or higher and 0 °C or lower.

4. The seal material according to claim 1, wherein the resin (B) is a water-based acrylic resin.

5. The seal material according to claim 1, wherein the density of the fibrous substrate is 160 kg/m³ or more and 250 kg/m³ or less.

6. The seal material according to claim 1, wherein the thickness of the fibrous substrate is 2 mm or more and less than 15 mm.

7. The seal material according to claim 1, wherein a release paper is provided on the adhesive layer.

FIG. 1

FIG. 2

## INTERNATIONAL SEARCH REPORT

International application No.

**PCT/JP2024/026176**

### A. CLASSIFICATION OF SUBJECT MATTER

**B32B 27/12**(2006.01)i; **B32B 5/02**(2006.01)i; **B32B 27/00**(2006.01)i; **C09J 7/21**(2018.01)i; **C09J 7/38**(2018.01)i; **C09K 3/10**(2006.01)i

FI: B32B27/12; B32B5/02 B; B32B27/00 M; C09J7/21; C09J7/38; C09K3/10 N

According to International Patent Classification (IPC) or to both national classification and IPC

### B. FIELDS SEARCHED

Minimum documentation searched (classification system followed by classification symbols)

B32B; C09J7/00-7/50; C09K3/10-3/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-187048 A (TOMOEGAWA PAPER CO., LTD.) 13 December 2021 (2021-12-13) claims, paragraphs [0017], [0018], [0027], [0053]-[0061], examples | 1-7 |
| X | WO 2023/063382 A1 (TOMOEGAWA PAPER CO., LTD.) 20 April 2023 (2023-04-20) claims, paragraphs [0018], [0019], [0026]-[0028], examples, particularly example 23 | 1-7 |
| A | JP 11-269441 A (NICHIAS CORP.) 05 October 1999 (1999-10-05) entire text | 1-7 |

☐ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/026176** |

| Patent document cited in search report | Publication date (day/month/year) | Patent family member(s) | Publication date (day/month/year) |
| --- | --- | --- | --- |
| JP 2021-187048 A | 13 December 2021 | (Family: none) | |
| WO 2023/063382 A1 | 20 April 2023 | CA 3235003 A1 claims, examples AU 2022366502 A1 KR 10-2024-0089609 A TW 202328372 A | |
| JP 11-269441 A | 05 October 1999 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11269441 A
- JP H09310049 A

- JP 2007107171 A